# EUROPEAN PATENT APPLICATION

(11) **EP 4 685 873 A2**
(43) Date of publication of application: **28.01.2026**
(21) Application number: 25181707.8
(22) Date of filing: 10.06.2025
(51) Int. Cl.: H01M 4/36, H01M 4/505, H01M 4/525, H01M 4/58, H01M 10/052, H01M 10/056, H01M 10/0568

(54) **SECONDARY BATTERY**

(30) Priority: 24.07.2024 JP 2024118523
(71) Applicant: DENSO CORPORATION, Kariya-city, Aichi-pref., 448-8661 (JP)
(72) Inventor: SHIMONISHI, Yuta, Aichi-pref.,, 448-8661 (JP); YOSHIDA, Shuhei, Aichi-pref.,, 448-8661 (JP); MASUO, Yuta, Aichi-pref.,, 448-8661 (JP)
(74) Representative: TBK

(57) **Abstract**

A secondary battery includes a positive electrode (14), a negative electrode (12), and an electrolyte layer (15) including an electrolyte solution (15a) that conducts a conductive ion between the positive electrode and the negative electrode. The positive electrode includes a positive electrode active material (14a) and an oxide-based ionic conductor (14b). The positive electrode active material is in contact with at least a part of the oxide-based ionic conductor. The electrolyte solution exists between the positive electrode active material and the oxide-based ionic conductor to allow the conductive ion to be electrochemically inserted into the oxide-based ionic conductor.

## Description

### TECHNICAL FIELD

The present disclosure relates to secondary batteries.

### BACKGROUND

JP 53198879 discloses technique to suppress chemical reactions between an electrolyte and a positive electrode active material under a high temperature environment by adding a lithium-ion conductive oxide solid electrolyte to the positive electrode of a lithium-ion battery. JP 53198879 further discloses that the addition of the lithium-ion conductive oxide solid electrolyte allows the reduction of the amount of electrolyte, thereby improving the safety of the secondary battery.

### SUMMARY

However, even if the positive electrode in the configuration of JP 53198879 contains a conductive agent, the electron conduction path in the positive electrode is insufficient, making it difficult to sufficiently improve the output of the secondary battery.

In view of the above, the present disclosure provides a secondary battery that includes an oxide-based ionic conductor in a positive electrode and has an improved output.

In order to achieve the above objective, one aspect of the present disclosure includes a positive electrode, a negative electrode, and an electrolyte layer having an electrolyte configured to conduct a conductive ion between the positive electrode and the negative electrode. The positive electrode contains a positive electrode active material and an oxide-based ionic conductor. The positive electrode active material is in contact with at least a part of the oxide-based ionic conductor. The electrolyte solution exists between the positive electrode active material and the oxide-based ionic conductor to allow the conductive ion to be electrochemically inserted into the oxide-based ionic conductor.

This allows the oxide-based ionic conductor to exhibit electronic conductivity in addition to ionic conductivity. This increases the number of electron conduction paths in the positive electrode, and improves the output of the secondary battery. Furthermore, since the oxide-based ionic conductor has electronic conductivity, the amount of a conductive agent used in the positive electrode can be reduced.

### BRIEF DESCRIPTION OF DRAWING

FIG. 1 is a cross-sectional view showing the structure of a secondary battery according to an embodiment of the present disclosure.
FIG. 2 is a SEM image of a positive electrode active material and an oxide-based ionic conductor.
FIG. 3 is a conceptual diagram showing the configuration of the positive electrode active material and the oxide-based ionic conductor.
FIG. 4 is a conceptual diagram showing the configuration of the positive electrode active material and the oxide-based ionic conductor.
FIG. 5 is a diagram showing the crystal structure of a pyrochlore-type oxide.
FIG. 6 is a diagram showing the manufacturing process of a pyrochlore-type oxide.
FIG. 7 is a diagram for explaining that the oxide-based ionic conductor acquires electronic conductivity.
FIG. 8 shows charge/discharge curves of a battery cell including LLNOF and a lithium metal electrode.
FIG. 9 is a diagram showing the discharge characteristics of secondary batteries of Examples and Comparative Examples.

### DESCRIPTION OF EMBODIMENTS

The embodiments of the present disclosure will be described below with reference to the drawings. In this embodiment, active material composite particles are applied to a positive electrode active material of a secondary battery 10. The secondary battery 10 of this embodiment is a lithium-ion battery in which lithium ions conduct as conductive ions. Unless otherwise noted, the particle size in this embodiments refers to the median particle size D50. The median particle size D50 is the particle size at which the cumulative volume of the smaller particles in the particle size distribution reaches 50% of the total particle volume. In other words, the median particle size D50 corresponds to the particle size at the median of the volume-based particle size distribution.

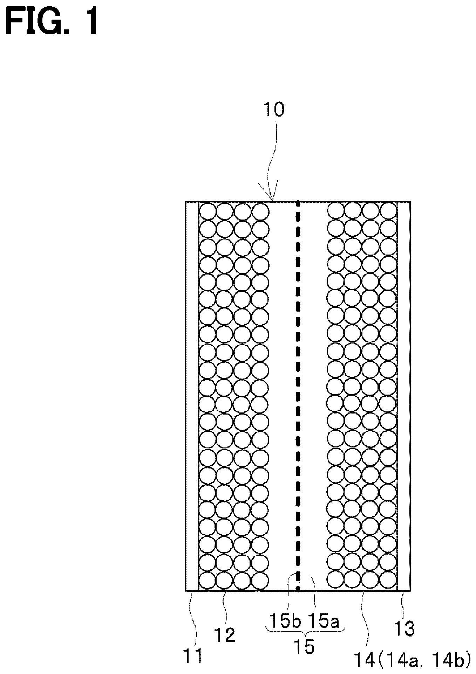

As shown in FIG. 1, the secondary battery 10 includes a negative electrode current collector 11, a negative electrode 12, a positive electrode current collector 13, a positive electrode 14, and an electrolyte layer 15.

The electrolyte layer 15 is sandwiched between the positive electrode 14 and the negative electrode 12. The negative electrode 12 and the electrolyte layer 15 are in contact with each other. The positive electrode 14 and the electrolyte layer 15 are in contact with each other. The negative electrode 12 and the positive electrode 14 are connected via the electrolyte layer 15. In the secondary battery 10 of this embodiment, charging and discharging are performed by lithium ions moving between the negative electrode 12 and the positive electrode 14 via the electrolyte layer 15.

The electrolyte layer 15 includes an electrolyte solution 15a and an insulating layer 15b. The electrolyte solution 15a is present from the negative electrode 12 to the positive electrode 14 and permeates into the negative electrode 12 and the positive electrode 14. The electrolyte layer 15 may partially contain a solid electrolyte.

The electrolyte solution 15a has lithium-ion conductivity and conducts ions between the negative electrode 12 and the positive electrode 14. The electrolyte solution 15a contains a lithium salt and a solvent. As the lithium salt, a typical lithium salt (e.g., lithium hexafluorophosphate: LiPF₆) used in lithium-ion batteries can be used. The solvent constituting the electrolyte solution 15a may be an organic electrolyte solution, an ionic liquid, a gel polymer, or the like. These solvents may be used alone or in combination.

The insulating layer 15b is disposed between the negative electrode 12 and the positive electrode 14 and separates the negative electrode 12 and the positive electrode 14 from each other. The insulating layer 15b is an insulating ion permeable membrane that prevents physical contact between the negative electrode 12 and the positive electrode 14 to suppresses an electrical short circuit and that allows ions to permeate therethrough.

In this embodiment, a porous separator is used as the insulating layer 15b. The separator may be made of polypropylene, polyethylene, or nonwoven fabric. The surface of the separator may be coated with a solid electrolyte. The insulating layer 15b may be a polymer sheet or a solid electrolyte sheet. The solid electrolyte sheet is a free-standing membrane.

The negative electrode current collector 11 and the positive electrode current collector 13 can be made of any material that can be used as a current collector for lithium-ion batteries. In this embodiment, Cu is used as the negative electrode current collector 11, and Al is used as the positive electrode current collector 13.

A negative electrode material constituting the negative electrode 12 can be any material that can be used as a negative electrode active material for lithium-ion batteries, such as a carbon-based negative electrode material, an oxide-based negative electrode material, or a metal-based negative electrode material. In the present embodiment, graphite is used as a negative electrode material. The negative electrode 12 may contain a conductive agent, a binder, and a polymer. The negative electrode 12 may further include a solid electrolyte. When the negative electrode 12 contains a solid electrolyte, the solid electrolyte may be mixed with the negative electrode material, or the surface of the negative electrode material may be coated with the solid electrolyte.

The positive electrode 14 releases lithium ions during the charging of the secondary battery 10 and accepts lithium ions during the discharging of the secondary battery 10. The positive electrode 14 includes a positive electrode active material 14a as a positive electrode material, and an oxide-based ionic conductor 14b having ionic conductivity. The oxide-based ionic conductor 14b is an oxide-based solid electrolyte having ionic conductivity. The oxide-based ionic conductor 14b in the positive electrode 14 can suppress the reaction between the positive electrode active material 14a and the electrolyte solution 15a.

The positive electrode 14 may include a conductive agent, a binder, and a polymer. The positive electrode 14 may further include a solid electrolyte. When the positive electrode 14 contains a solid electrolyte, the solid electrolyte may be mixed with the positive electrode active material 14a, or the surface of the positive electrode active material 14a may be coated with the solid electrolyte.

The positive electrode active material 14a may be any material that can be used as a positive electrode active material for lithium-ion batteries. The positive electrode active material 14a may be layered rock-salt type active materials, olivine type active materials, or spinel type active materials. Examples of the layered rock-salt type active materials include ternary positive electrode materials such as LiNiₓCo_{y}Mn_{z}O₂ (i.e., NCM) and LiNiₓCo_{y}Al_{z}O₂ (i.e., NCA). Examples of the olivine type active materials include LiFePO₄ (i.e., LFP), LiMn₁₋ₓFeₓPO₄ (i.e., LMFP), LiMnPO₄ (i.e., LMP), LiCoPO₄ (i.e., LCP), and LiNiPO₄ (i.e., LNP). Examples of the spinel type active materials include LiMn₂O₄ (i.e., LMO) and LiNi_{0.5}Mn_{1.5}O₄ (i.e., LNMO).

The oxide-based ionic conductor 14b may be a pyrochlore type oxide or a perovskite type oxide. Examples of pyrochlore-type oxides include Li₂₋ₓLa_{(1+x)/3}Nb₂O₆F (i.e., LLNOF) and Li₂₋ₓLa_{(1+x)/3}Ta₂O₆F (i.e., LLTOF). As the perovskite oxide, Li₃ₓLa_{2/3-x}TiO₃ (i.e., LLTO) can be used. Among these oxides, pyrochlore type oxides have high ionic conductivity and can be suitably used as the oxide-based ionic conductor 14b. The pyrochlore-type oxide will be described in detail later.

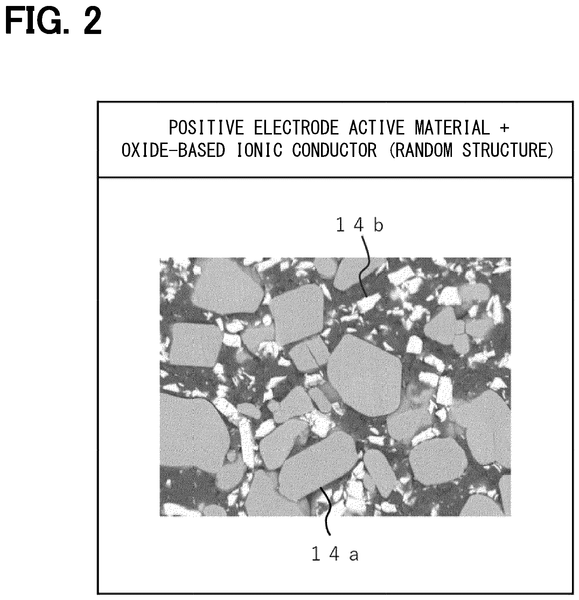

FIG. 2 is a SEM image showing a random structure of the positive electrode active material 14a and the oxide-based ionic conductor 14b in the positive electrode 14. FIG. 2 shows a state in which the electrolyte solution 15a is not present. In FIG. 2, the relatively large particles shown in gray (neutral color) are the positive electrode active material 14a, and the relatively small particles shown in white are the oxide-based ionic conductor 14b. In FIG. 2, the portion indicated in black between the positive electrode active material 14a and the oxide-based ionic conductor 14b is where the conductive agent and the binder are present.

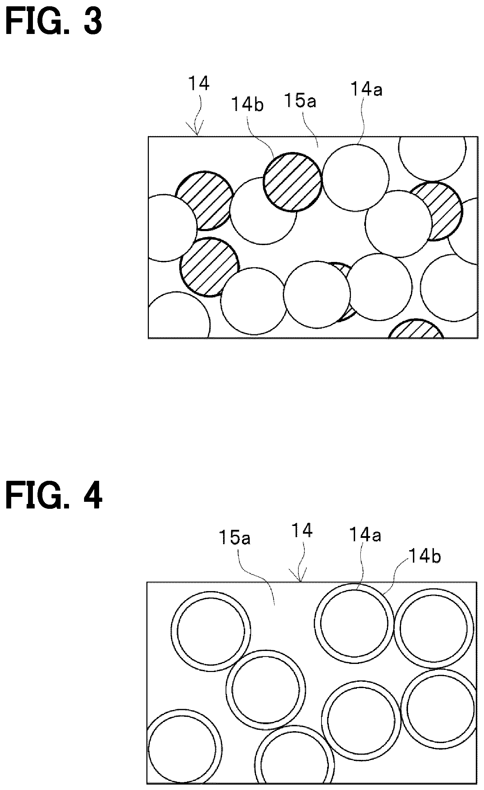

FIG. 3 shows an example of a random structure in which the positive electrode active material 14a and the oxide-based ionic conductor 14b are randomly mixed in the positive electrode 14. FIG. 4 shows an example of a layered structure in which the outer surface of the positive electrode active material 14a is covered with the oxide-based ionic conductor 14b in the positive electrode 14. The positive electrode active material 14a and the oxide-based ionic conductor 14b can be provided in any desired form, such as a random structure as shown in FIG. 3 or a layered structure as shown in FIG. 4. In the positive electrode 14, it is sufficient that at least a portion of the oxide-based ionic conductor 14b is in direct contact with the positive electrode active material 14a.

In the positive electrode 14, the electrolyte solution 15a exists between the positive electrode active material 14a and the oxide-based ionic conductor 14b. Thus, the positive electrode active material 14a, the oxide-based ionic conductor 14b, and the electrolyte solution 15a form a three-phase interface in a portion where the positive electrode active material 14a and the oxide-based ionic conductor 14b are in contact with each other. In FIG. 4, the oxide-based ionic conductor 14b is illustrated in a layered form, but in reality, the oxide-based ionic conductor 14b is in a particulate form, and the electrolyte solution 15a permeates into the gaps between the particles of the particulate oxide-based ionic conductor 14b, forming the three-phase interface.

The three-phase interface formed among the positive electrode active material 14a, the oxide-based ionic conductor 14b, and the electrolyte solution 15a allows lithium ions to be conducted between the positive electrode active material 14a and the oxide-based ionic conductor 14b via the electrolyte solution 15a. Thus enables the electrochemical insertion of lithium ions into the oxide-based ionic conductor 14b. It is not always necessary to change the electrode potential in order to insert lithium ions into the oxide-based ionic conductor 14b.

The oxide-based ionic conductor 14b exhibits electronic conductivity when lithium ions, which are conductive ions, are inserted into the crystal structure of the oxide-based ionic conductor 14b. The oxide-based ionic conductor 14b retains its ionic conductivity even after the electronic conductivity is exhibited. That is, the oxide-based ionic conductor 14b becomes a mixed electronic-ionic conductor having both electronic conductivity and ionic conductivity. The electronic conductivity exhibited by the oxide-based ionic conductor 14b increases the number of electronic conduction paths in the positive electrode 14.

In order to effectively achieve ionic conduction between the positive electrode active material 14a and the oxide-based ionic conductor 14b via the electrolyte solution 15a, it is desirable to use a solvent that easily undergoes solvation as the solvent for the electrolyte solution 15a, and it is preferable to use a solvent with a high donor number. Examples of solvents with a high donor number include ethylene carbonate (EC), propylene carbonate (PC), and diethyl carbonate (DEC).

In order to effectively achieve ion conduction between the positive electrode active material 14a and the oxide-based ionic conductor 14b via the electrolyte solution 15a, it is desirable to increase the concentration of lithium salt in the electrolyte solution 15a. In the present embodiment, the concentration of the lithium salt in the electrolyte solution 15a is set to 1 M (mol/L) or more.

In the positive electrode 14, the weight ratio of the oxide-based ionic conductor 14b to the positive electrode active material 14a is desirably greater than 0 wt% and equal to or less than 10 wt%. By setting the weight ratio of the oxide-based ionic conductor 14b to the positive electrode active material 14a to a value greater than 0 wt%, the ionic conductivity and electronic conductivity of the positive electrode 14 can be improved. As the weight ratio of the oxide-based ionic conductor 14b increases, the ionic conductivity and electronic conductivity of the positive electrode 14 can be improved. However, this leads to a decrease in the positive electrode active material 14a, resulting in a decrease in the battery capacity and the energy density. For this reason, it is desirable that the weight ratio of the oxide-based ionic conductor 14b to the positive electrode active material 14a be 10 wt% or less.

In the positive electrode 14, the particle size of the positive electrode active material 14a is preferably larger than the particle size of the oxide-based ionic conductor 14b. By setting the particle size of the positive electrode active material 14a to a value greater than the particle size of the oxide-based ionic conductor 14b, the proportion of the surface area of the positive electrode active material 14a in contact with the oxide-based ionic conductor 14b can be increased. Thus, the effect of improving the ionic conductivity and electronic conductivity can be enhanced.

Here, the pyrochlore oxide used as the oxide-based ionic conductor 14b of the positive electrode 14 will be described. The pyrochlore-type oxide used in this embodiment has a pyrochlore structure represented by the composition formula "Aa_{2-α}Ab_{(1+α)/3}B₂O_{7-β}X_{γ}". In the above composition formula, O represents an oxygen atom, and Aa, Ab, B, and X represent any elements or groups. Aa, Ab, and B are different types of cations, while O and X are different types of anions. Aa is an alkali metal cation. The pyrochlore-type oxide contains multiple cations in its composition, including an alkali metal cation Aa and multiple cations Ab and B that are different from the alkali metal cation Aa. In other words, the pyrochlore-type oxide contains multiple cations in its composition, including an alkali metal cation Aa.

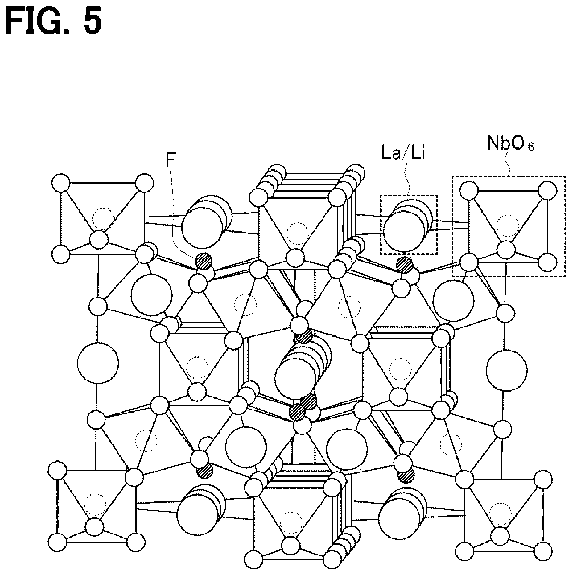

As shown in FIG. 5, the pyrochlore-type oxide has a crystal structure in which a three-dimensional network of octahedra formed of BO₆ (NbO₆) is formed. BO₆ consists of a cation B at the center with O positioned at the vertices, and it shares vertices with adjacent BO₆. In the three-dimensional network consisting of BO₆, a hexagonal tunnel structure is formed where cation A and anion X are positioned.

In the above composition formula, 0.6 < α < 2.0, 0 < β ≤ 1, and 0 < γ ≤ 1. As α changes, the composition ratio of Aa to Ab changes, and as β and γ change, the composition ratio of O to X changes.

Cation Aa is an alkali metal cation. As the alkali metal represented by Aa, any one of Li, Na, K, Rb, or Cs can be used. As the cation Aa, Mg or H other than alkali metals may also be used. In other words, the cation Aa includes at least one selected from Li, Na, K, Rb, Cs, Mg, and H. In this embodiment, Li is used as Aa. The composition ratio (2-α) of Aa falls within the range of 0 < (2-α) < 1.4.

The cation Ab includes at least a lanthanoid. As the lanthanoid represented by Ab, at least one of La, Ce, Nd, or Sm can be used. In this embodiment, La is used as Ab. The composition ratio (1+α)/3 of Ab falls within the range of 0.53 < (1+α)/3 < 1.

The basic structure of the cation Ab consists of a lanthanoid. However, a portion of the lanthanoid constituting Ab may be substituted with an alkaline earth metal (such as Ca, Mg, or Sr). The pyrochlore-type oxide of this embodiment has a composition where 0.6 < α < 2.0 and 0 < β ≤ 1 in the above formula. It is considered that the inclusion of a lanthanoid in the pyrochlore structure creates defects in the crystal structure, thereby improving ionic conductivity. In this embodiment, La is used as Ab.

The pyrochlore-type oxide of this embodiment is a composite cation where the cation A in the general pyrochlore structure composition formula "A₂B₂O₇" is a combination of lithium metal and a lanthanoid. This is believed to contribute to the improvement of the ionic conductivity of the pyrochlore-type oxide.

The cation B is a metal cation different from Aa and Ab, selected from transition metals or metals from groups 13 to 15. B forms an octahedron surrounded by six O atoms within the crystal. As the transition metal represented by B, a group 4 or group 5 transition metal can be used, and more specifically, at least one of Nb, Ta, Ti, Zr, Hf, or V can be used. As the group 13 element represented by B, Al, Ga, or In can be used. As the group 14 element, Ge or Sn can be used. As the group 15 element, Sb or Bi can be used.

As described above, the oxide-based ionic conductor 14b of the present embodiment exhibits electronic conductivity by lithium ions, which are conductive ions, inserted into the crystal structure. When the electrode potential of the oxide-based ionic conductor 14b is lowered, the lithium-ion insertion/extraction reaction of the oxide-based ionic conductor 14b is promoted. In the pyrochlore type oxide, the electrode potential at which the lithium-ion insertion/extraction reaction occurs changes depending on the type of cation B. When Nb is used as the cationic metal represented by B in the composition formula, the pyrochlore type oxide can enhance the effect of exhibiting electronic conductivity.

The anion X is an anion that can substitute for the O atoms constituting the pyrochlore structure. X has different electronegativity and polarizability compared to the O atom. As the anion represented by X, at least one of O, F, Cl, Br, I, S, OH, or P can be used. The composition ratio γ of X falls in the range of 0 < γ ≤ 1, and at least a part of the O atoms constituting the pyrochlore structure is substituted with X.

The substitution of a part of the O atoms constituting the pyrochlore structure with an anion that has different electronegativity and polarizability from the O atom forms a defect structure including lattice defects in the crystal of the pyrochlore-type oxide of this embodiment. The pyrochlore-type oxide of this embodiment is believed to have improved ionic conductivity due to the defect structure in the pyrochlore structure.

The pyrochlore type oxide is preferably a halogen-containing oxide in which a halogen element is used as the anion X. In the pyrochlore type oxide containing a halogen element, defects are generated in the crystal structure, which facilitates insertion and extraction of Li, and makes it easier for the pyrochlore type oxide to exhibit electronic conductivity. It is preferable to use F as the anion X.

In the pyrochlore-type oxide of this embodiment, the defect structure includes a state where a part of Aa and Ab is deficient. The general formula for a pyrochlore structure is "A₂B₂O₇", where the compositional ratio of the cation A is 2. In contrast, in the pyrochlore-type oxide of this embodiment, the compositional ratios of Aa and Ab are "2-α" and "(1+α)/3", respectively. Since α falls within the range of 0.6 < α < 2.0, the total compositional ratio of Aa and Ab is less than 2. In other words, in the crystal structure of the pyrochlore-type oxide of this embodiment, at least a part of either Aa or Ab is deficient. The compositional ratio corresponding to the deficient portions of Aa and Ab is (2α-1)/3.

Additionally, apart from the deviation in compositional ratios, a defect structure can also be formed by making the sum of the valences of the cations consisting of Aa, Ab, and B, and the anions consisting of O and X, negative in the above compositional formula.

Furthermore, the pyrochlore-type oxide of this embodiment is a complex anion compound that includes multiple anions such as O and X in its pyrochlore structure. Since the anion represented by X is present in the BO₆ coordinated octahedral structure, the alkali metal of Aa can be positioned in the central part of the space between the BO₆ coordinated octahedra, without being adjacent to the BO₆ coordinated octahedra. Thus, the pyrochlore-type oxide of this embodiment is considered to have high ionic conductivity when used under an electric field, such as in a battery.

Additionally, since α, β, and γ in the above compositional formula affect lattice defects and ionic conductivity, it is desirable to set α, β, and γ within an appropriate range. When the values of α, β, and γ are large, the defect concentration in the crystal lattice increases. However, if these values exceed a certain amount, the concentration of the alkali metal represented by Aa decreases, leading to a reduction in ionic conductivity. Thus, it is desirable to control α within the range of 0.6 < α < 2.0, β within the range of 0 < β ≤ 1, and γ within the range of 0 < γ ≤ 1.

An example of the pyrochlore oxide is the pyrochlore oxide represented by "Li_{1.25}La_{0.58}Nb₂O₆F (LLNOF)." In LLNOF, Li is used as cation Aa, La as cation Ab, Nb as cation B, and F as anion X, with α set to 0.75, β set to 1, and γ set to 1.

The pyrochlore-type oxide of this embodiment achieves an ionic conductivity of 1×10⁻³ S/cm or higher. In the pyrochlore-type oxide of this embodiment, significantly higher ionic conductivity is achieved compared to other oxide-type solid electrolytes such as garnet-type oxides.

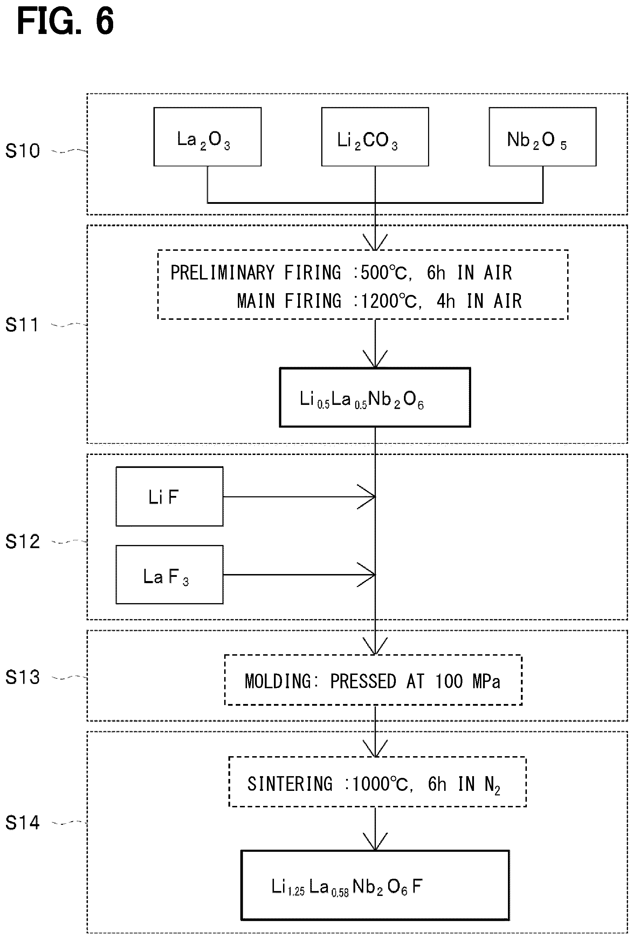

FIG. 6 illustrates the manufacturing method of the pyrochlore-type oxide according to this embodiment. In the manufacturing method of the pyrochlore-type oxide, the first mixing step S10, the first firing step S11, the second mixing step S12, the molding step S13, and the second firing step S14 are sequentially performed.

First, a lanthanum source, a lithium source, and a niobium source are prepared as raw materials of the pyrochlore oxide, and the first mixing step S10 of mixing the raw materials is performed. Metal oxides or metal carbonates may be used as the lanthanum source, the lithium source, and the niobium source. In the present embodiment, La₂O₃ is used as the lanthanum source, Li₂CO₃ is used as the lithium source, and Nb₂O₅ is used as the niobium source. In the first mixing step S10, La₂O₃, Li₂CO₃, and Nb₂O₅ are mixed at a predetermined ratio.

Next, the first firing step S11 is performed in which the mixture prepared in the first mixing step S10 is fired. In the first firing step S11, a two-stage firing process is performed. As the first stage, a preliminary firing is performed by heating the mixture in air at 500 °C for 6 hours. The preliminary firing removes moisture and other substances from the mixture, thereby enhancing its reactivity. Subsequent to the preliminary firing, a main firing in which the mixture is heated in air at 1200 °C for 4 hours is performed. Accordingly, Li_{0.5}La_{0.5}Nb₂O₆ which is a precursor of a target product is obtained.

Next, a fluorine source is prepared as a raw material, and this is mixed with the precursor in the second mixing step S12. A metal fluoride may be used as the fluorine source. In this embodiment, LiF and LaF₃ are used as the fluorine sources. LiF serves as both the fluorine source and the lithium source, while LaF₃ serves as both the fluorine source and the lanthanum source. In the second mixing step S12, LiF and LaF₃ are mixed with the precursor at a predetermined ratio.

Next, the precursor and the mixed powder of LiF and LaF₃ are formed into pellets, followed by a molding step S13 where the pellets are pressed at 100 MPa. As a result, the mixture of the precursor, LiF, and LaF₃ is molded into pellets.

Next, a second firing step S14 is performed in which the mixture of the precursor, LiF, and LaF₃ is sintered. In the second firing step S14, the mixture of the precursor, LiF, and LaF₃ is heated and sintered at 1000 °C for 6 hours in a nitrogen atmosphere. In the second firing step S14, to suppress compositional deviation due to the volatilization of Li and F elements, sintering may be performed in a sealed state or in a state covered with mother powder.

By cooling the product of the second firing step S14, a pyrochlore-type oxide represented by the compositional formula "Li_{1.25}La_{0.58}Nb₂O₆F (LLNOF)" is obtained. The resulting pyrochlore-type oxide is in particulate form.

Note that a pyrochlore solid electrolyte represented by the composition formula "Li_{2-α}La_{(1+α)/3}Nb2O_{7-β}F_{β}" can be obtained by changing the mixing ratio of La₂O₃, Li₂CO₃, and Nb₂O₅ in the above production process. By changing the mixing ratio of La₂O₃, Li₂CO₃, Nb₂O₅, LiF, and LaF₃, the values of α, β, and γ in the composition formula can be adjusted. Additionally, a portion of the material sublimates during the firing process. Thus, the values of α, β, and γ can also be adjusted by changing the firing conditions, the atmosphere in the firing furnace, and the size of the firing furnace in the first and second firing steps.

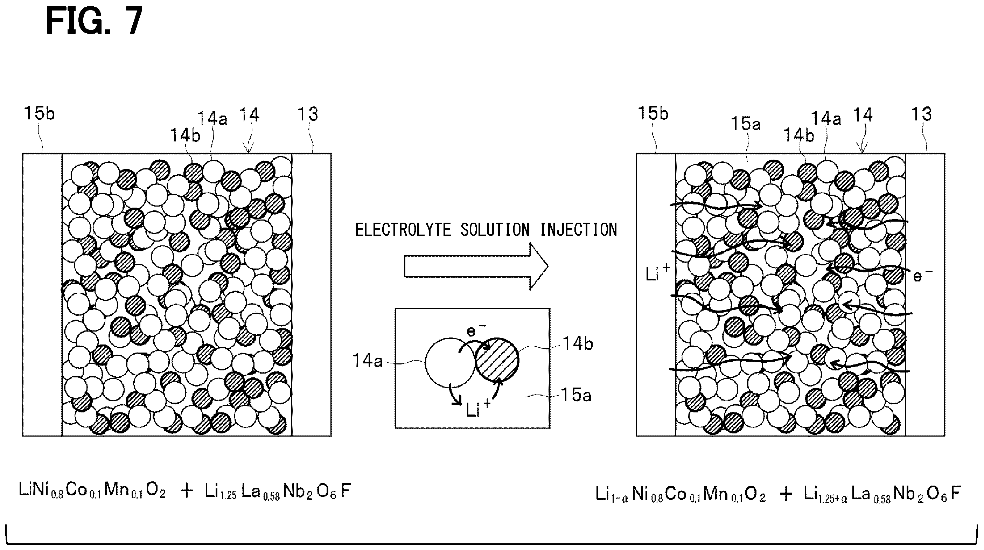

Next, the development of electronic conductivity of the oxide-based ionic conductor 14b will be described with reference to FIG. 7. In the example shown in FIG. 7, LiNi_{0.8}Co_{0.1}Mn_{0.1}O₂ (NCM811) is used as the positive electrode active material 14a, and Li_{1.25}La_{0.58}Nb₂O₆F (LLNOF) is used as the oxide-based ionic conductor 14b.

In FIG. 7, the left side shows the initial state before the electrolyte solution 15a is injected into the positive electrode 14, and the right side shows the usage state after the electrolyte solution 15a is injected into the positive electrode 14.

In the initial state, the electronic conductivity of LLNOF is 8.3×10⁻⁸ S/cm, which is close to the electronic conductivity of an insulator. For example, the electronic conductivity of the oxide solid electrolyte Li₁₊ₓAlₓTi₂₋ₓ(PO₄)₃ (LATP) is 8.5×10⁻⁸ S/cm. The electronic conductivities of LLNOF and LATP in the initial state were measured using pellets formed by sintering the respective powders.

When the electrolyte solution 15a is injected into the positive electrode 14, the positive electrode active material 14a and the oxide-based ionic conductor 14b react locally at the portion where the positive electrode active material 14a and the oxide-based ionic conductor 14b are in contact. By injecting the electrolyte solution 15a into the positive electrode 14, a three-phase interface is formed among the positive electrode active material 14a, the oxide-based ionic conductor 14b, and the electrolyte solution 15a in the portion where the positive electrode active material 14a and the oxide-based ionic conductor 14b are in direct contact.

Due to the formation of the three-phase interface, lithium ions are extracted from the positive electrode active material 14a, and the lithium ions are electrochemically inserted into the crystal structure of the oxide-based ionic conductor 14b via the electrolyte solution 15a. The extraction of lithium ions from the positive electrode active material 14a and the insertion of lithium ions into the oxide-based ionic conductor 14b proceed simply by injecting the electrolyte solution 15a into the positive electrode 14, and it is not necessary to change the electrode potential for the extraction and insertion of lithium ions.

When lithium ions are extracted from NCM811, the composition formula changes from "LiNi_{0.8}Co_{0.1}Mn_{0.1}O₂" to "Li_{1-α}Ni_{0.8}Co_{0.1}Mn_{0.1}O₂". When lithium ions are inserted into LLNOF, the composition formula of LLNOF changes from "Li_{1.25}La_{0.58}Nb₂O₆F" to "Li_{1.25+α}La_{0.58}Nb₂O₆F". As lithium ions are inserted into LLNOF, Nb in LLNOF is reduced and its oxidation number changes from "+5" to "5-δ+". LLNOF exhibits electronic conductivity through lithium-ion insertion.

The electronic conductivity of LLNOF was improved to 4.8 × 10⁻³ S/cm by the lithium-ion insertion. That is, the oxide-based ionic conductor 14b of this embodiment exhibits high electronic conductivity in addition to high ionic conductivity due to the insertion of lithium ions. The electronic conductivity of LLNOF after lithium-ion insertion was measured after the potential of the LLNOF pellet was set to 2.5 V or less and lithium-ion insertion and extraction were performed.

In this embodiment, the concentration of the electrolyte solution 15a is set to be higher than 1 M, so that the insertion of lithium ions into the oxide-based ionic conductor 14b can be effectively promoted. Furthermore, in this embodiment, a solvent with a high donor number is used, thereby allowing the lithium ions insertion into the oxide-based ionic conductor 14b to proceed effectively.

After the electrolyte solution 15a is injected into the positive electrode 14, the secondary battery 10 is overdischarged to reduce the electrode potential to 2.5 V or less, thereby improving the electronic conductivity of the oxide-based ionic conductor 14b. By setting the electrode potential to 2.5 V or less, it becomes possible to insert lithium ions extracted from the positive electrode active material 14a into the oxide-based ionic conductor 14b even in a portion where the positive electrode active material 14a and the oxide-based ionic conductor 14b are not in direct contact with each other and no three-phase interface is formed. As a result, the proportion of the oxide-based ionic conductor 14b that exhibits electronic conductivity can be increased.

As the electrode potential is lowered, the number of lithium ions inserted into the oxide-based ionic conductor 14b increases, and α in "Li_{1.25+α}La_{0.58}Nb₂O₆F" becomes larger. On the other hand, if the electrode potential is made too low, the oxide-based ionic conductor 14b will be irreversibly deteriorated. For this reason, it is desirable to carry out the lithium-ion insertion/extraction reaction in the oxide-based ionic conductor 14b at an electrode potential of 0.5 V or higher.

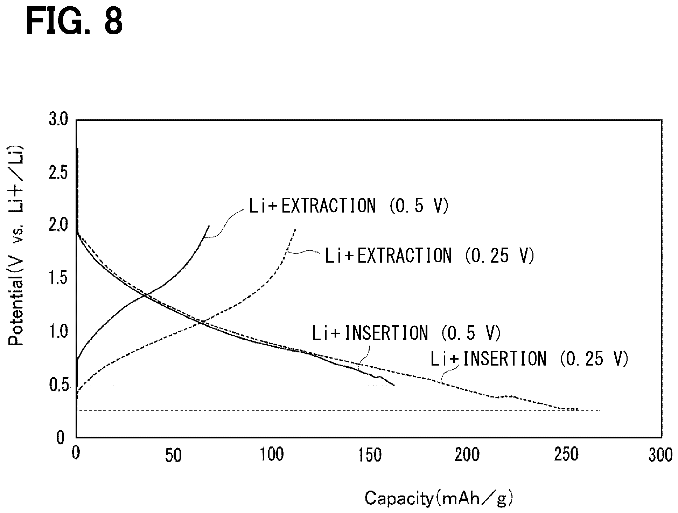

FIG. 8 shows the charge/discharge characteristics of a battery cell having LLNOF. In the example shown in FIG. 8, a battery cell composed of lithium metal, an electrolyte, and LLNOF was used, and lithium ions were inserted and extracted from the LLNOF by changing the electrode potential. The unit of the potential V on the vertical axis of FIG. 8 is "V vs. Li⁺/Li".

In FIG. 8, the solid line sloping downward to the right indicates the capacity when the potential is lowered to 0.5 V, and the solid line sloping upward to the right indicates the capacity when the potential is increased after being lowered to 0.5 V. In FIG. 8, the dashed line sloping downward to the right indicates the capacity when the potential is lowered to 0.25 V, and the dashed line sloping upward to the right indicates the capacity when the potential is increased after being lowered to 0.25 V.

As shown in FIG. 8, the capacity increases when the potential is lowered below 2 V. This capacity increase reflects the insertion of lithium ions into LLNOF and the formation of a Li-coating on the surface of the Li metal of LLNOF. The increase in capacity is greater when the potential is lowered to 0.25 V than when the potential is lowered to 0.5 V.

By increasing the potential from 0.25 V or 0.5 V, the lithium ions inserted into LLNOF are extracted. The capacity during this potential increase is considered to correspond to the amount of lithium ions inserted into LLNOF. The electronic conductivity of LLNOF exhibited by the lithium-ion insertion is maintained even after the lithium ions are extracted from LLNOF.

When the potential is lowered to 0.25 V, the irreversible capacity, which is the difference between the capacity when the potential is lowered and the capacity when the potential is increased, is large, and the degree of deterioration of LLNOF is large. This is thought to be due to the fact that, as a result of an increased insertion of lithium ions into LLNOF, some of the oxygen (O) and fluorine (F) elements contained in LLNOF are irreversibly extracted. On the other hand, when the potential is lowered to 0.5 V, the irreversible capacity, which is the difference between the capacity when the potential is lowered and the capacity when the potential is increased, is smaller, and the degree of deterioration of LLNOF is smaller. For this reason, it is preferrable to perform lithium-ion insertion into LLNOF at a potential of 0.5 V or higher.

When lithium ions are inserted into LLNOF at a potential of 0.5 V or higher, the composition formula of LLNOF becomes "Li_{2.25}La_{0.58}Nb₂O₆F". In other words, in the composition formula "Li_{1.25+α}La_{0.58}Nb₂O₆F", α, which indicates the amount of lithium inserted into LLNOF is "1". That is, the amount of lithium inserted into LLNOF "1" is 80% of the amount of lithium initially contained in LLNOF "1.25". Irreversible deterioration of LLNOF can be suppressed by setting the amount of lithium that is inserted into LLNOF to 80% or less of the amount of lithium initially contained in LLNOF.

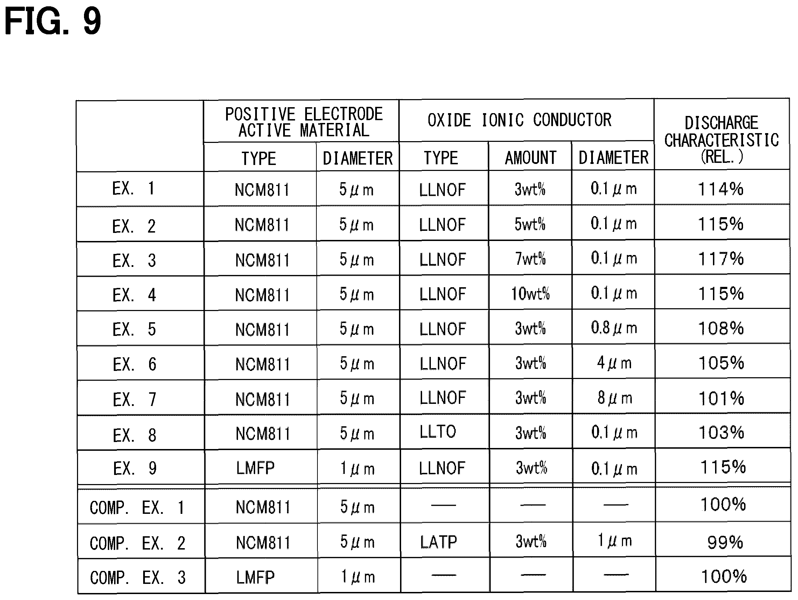

Next, the discharge characteristics of the secondary battery 10 when the types, particle sizes, etc. of the positive electrode active material 14a and the oxide-based ionic conductor 14b are varied will be described with reference to examples and comparative examples shown in FIG. 9. In the example shown in FIG. 9, a negative electrode 12 made of graphite was used, and an electrolyte solution 15a in which LiPF₆ was added at a concentration of more than 1 M to a solvent in which EC and DEC were mixed in a ratio of 1:1 was used. The particle sizes in the examples and comparative examples were measured as follows. The target powder of each example or comparative example was dispersed in ethanol and the dispersed target power in ethanol was measured by the laser scattering particle size distribution analyzer (product name: Partica LA-960, manufactured by HORIBA, Ltd.) to obtain the volume-based particle size distribution.

The discharge characteristics in FIG. 9 are the dischargeable time until the lower limit voltage is reached when the secondary battery 10 is discharged at 10 C. The discharge characteristics are shown as relative values with the value of Comparative Example 1 taken as 100%.

As the positive electrode active material 14a, LiNi_{0.8}Co_{0.1}Mn_{0.1}O₂ (NCM811) was used in Examples 1 to 8 and Comparative Examples 1 and 2, and LiMn_{0.6}Fe_{0.4}PO₄ (LMFP) was used in Example 9 and Comparative Example 3.

As the oxide-based ionic conductor 14b, Li_{1.25}La_{0.58}Nb₂O₆F (LLNOF) was used in Examples 1 to 7 and 9, La_{0.57}Li_{0.29}TiO₃ (LLTO) was used in Example 8, and Li_{1.4}Al_{0.4}Ti_{1.6}(PO₄)₃ (LATP) was used in Comparative Example 2. In Comparative Examples 1 and 3, the positive electrode 14 was not provided with the oxide-based ionic conductor 14b.

The LLNOF of Examples 1 to 7 and 9 and the LLTO of Example 7 are oxide-based ionic conductors 14b into which lithium ions can be electrochemically inserted. The LATP of Comparative Example 2 is an oxide-based ionic conductor into which lithium ions cannot be electrochemically inserted.

The additive amount of the oxide-based ionic conductor 14b was 3 wt% in Examples 1, 5 to 9 and Comparative Example 2, 5 wt% in Example 2, 7 wt% in Example 3, and 10 wt % in Example 4. The additive amount of the oxide-based ionic conductor 14b is the weight ratio of the oxide-based ionic conductor 14b to the positive electrode active material 14a.

In Examples 1 to 4 and 8, the particle size of the positive electrode active material 14a is set to 5 µm, and the particle size of the oxide-based ionic conductor 14b is set to 0.1 µm. In Example 5, the particle size of the positive electrode active material 14a is set to 5 µm, and the particle size of the oxide-based ionic conductor 14b is set to 0.8 µm. In Example 6, the particle size of the positive electrode active material 14a is set to 5 µm, and the particle size of the oxide-based ionic conductor 14b is set to 4 µm. In Example 9, the particle size of the positive electrode active material 14a is set to 1 µm, and the particle size of the oxide-based ionic conductor 14b is set to 0.1 µm. In all of Examples 1 to 6, 8, and 9, the particle size of the positive electrode active material 14a is greater than the particle size of the oxide-based ionic conductor 14b.

In Example 7, the particle size of the positive electrode active material 14a is set to 5 µm, and the particle size of the oxide-based ionic conductor 14b is set to 8 µm. In Comparative Example 2, the particle size of the positive electrode active material 14a is set to 5 µm, and the particle size of the oxide-based ionic conductor 14b is set to 1 µm.

As shown in FIG. 9, when comparing Examples 1 to 8 with Comparative Examples 1 and 2, all of which use NCM811 as the positive electrode active material 14a, Examples 1 to 8 using the oxide-based ionic conductor 14b (LLNOF), into which lithium ions can be inserted, had discharge characteristics exceeding 100%. It is considered that the discharge characteristics are improved because the oxide-based ionic conductor 14b exhibits both electronic conductivity and ionic conductivity. In contrast, in Comparative Example 2 using oxide-based ions (LATP) into which lithium ions cannot be inserted, the discharge characteristic is below 100%.

In Examples 1 to 7, the type and particle size of the positive electrode active material 14a and the type of the oxide-based ionic conductor 14b are the same in combination. In Examples 1 to 7, there is a tendency that the smaller the particle size of the oxide-based ionic conductor 14b is, the higher the discharge characteristics are. In particular, in Examples 1 to 6 in which the particle size of the positive electrode active material 14a is greater than the particle size of the oxide-based ionic conductor 14b, excellent discharge characteristics are obtained.

Comparing Example 9 with Comparative Example 3, both using LMFP as the positive electrode active material 14a, the discharge characteristic in Example 9 with LLTO as the oxide-based ionic conductor 14b was 115%, whereas the discharge characteristic in Comparative Example 3 without the oxide-based ionic conductor 14b was 100%. That is, in Example 9, the discharge characteristics are improved by using the oxide-based ionic conductor 14b (LLTO) into which lithium ions can be inserted.

According to the present embodiment described above, with at least a portion of the oxide-based ionic conductor 14b in contact with the positive electrode active material 14a, the electrolyte solution 15a exists between the positive electrode active material 14a and the oxide-based ionic conductor 14b, thereby enabling lithium ions to be electrochemically inserted into the oxide-based ionic conductor 14b. This allows the oxide-based ionic conductor 14b to exhibit both electronic conductivity and ionic conductivity. As a result, the number of electron conduction paths in the positive electrode 14 can be increased, and the output of the secondary battery 10 can be improved. Furthermore, since the oxide-based ionic conductor 14b has electronic conductivity, the amount of the conductive agent used in the positive electrode 14 can be reduced.

Furthermore, according to this embodiment, by using an oxide containing a halogen as the oxide-based ionic conductor 14b, defects are generated in the crystal structure. This facilitates the insertion and extraction of Li, making it easier for the oxide-based ionic conductor 14b to exhibit electronic conductivity.

Furthermore, according to this embodiment, the oxide-based ionic conductor 14b maintains its ionic conductivity even when electronic conductivity is developed, and can thus have both ionic conductivity and electronic conductivity. Thus, the oxide-based ionic conductor 14b can improve the ionic conductivity and electronic conductivity of the positive electrode 14, and the output of the secondary battery 10 can be improved.

Furthermore, according to this embodiment, the potential at which lithium ions are inserted and extracted from the oxide-based ionic conductor 14b is set to 2.5 V (vs. Li⁺/Li) or less, thereby making it possible to increase the proportion of the oxide-based ionic conductor 14b that exhibits electronic conductivity. This can further improve the electronic conductivity of the oxide-based ionic conductor 14b.

Furthermore, according to this embodiment, the amount of lithium inserted into the oxide-based ionic conductor 14b is set to 80% or less of the amount of lithium initially contained in the oxide-based ionic conductor 14b. Thereby, it is possible to prevent the potential at which lithium ions are inserted into and extracted from the oxide-based ionic conductor 14b from becoming excessively low, and to prevent irreversible deterioration of the oxide-based ionic conductor 14b.

(Other embodiments) The present disclosure is not limited to the above-described embodiments and can be variously modified as follows without departing from the spirit of the disclosure. Additionally, the means disclosed in each of the above embodiments can be appropriately combined within the scope of feasibility.

In the above embodiments, the application of the active material composite particles of the present disclosure to lithium-ion batteries, where the conductive ions are lithium ions, has been described, but they may also be applied to secondary batteries with different conductive ions. Specifically, the active material composite particles of the present disclosure may be applied to potassium-ion batteries where potassium ions conduct, or sodium-ion batteries where sodium ions conduct.

Additionally, in the above embodiments, the application of the active material composite particles of the present disclosure to a secondary battery 10 with a pre-installed negative electrode 12 has been described, but the active material composite particles of the present disclosure may also be applied to an anode-free battery. In an anode-free battery, the negative electrode 12 is not formed on the negative electrode current collector 11 in the initial state. Instead, during charging, lithium metal is deposited on the negative electrode current collector 11 by lithium ions that move from the positive electrode 14, thereby forming the negative electrode 12. Then, the lithium metal constituting the negative electrode 12 moves to the positive electrode 14 as lithium ions during discharge.

Additionally, the active material composite particles 140 of the present disclosure may be applied to bipolar batteries. A bipolar battery has a structure in which multiple battery cells are stacked and connected in series, and the current collectors are shared between adjacent battery cells. In other words, the current collector in contact with the positive electrode of one adjacent battery cell is in contact with the negative electrode of the other adjacent battery cell.

The characteristics of the secondary battery disclosed in the present disclosure are described below.

### (item 1)

A secondary battery includes a positive electrode (14), a negative electrode (12), and an electrolyte layer (15) including an electrolyte solution (15a) that conducts a conductive ion between the positive electrode and the negative electrode. The positive electrode includes a positive electrode active material (14a) and an oxide-based ionic conductor (14b). The positive electrode active material is in contact with at least a part of the oxide-based ionic conductor. The electrolyte solution exists between the positive electrode active material and the oxide-based ionic conductor to allow the conductive ion to be electrochemically inserted into the oxide-based ionic conductor.

### (item 2)

In the secondary battery according to item 1, the oxide-based ionic conductor contains a halogen element in a crystal structure of the oxide-based ionic conductor.

### (item 3)

In the secondary battery according to item 1 or 2, the oxide-based ionic conductor is a mixed ionic-electronic conductor having both ionic conductivity and electronic conductivity with the conductive ion being inserted into the oxide-based ionic conductor.

### (item 4)

In the secondary battery according to any one of items 1 to 3, the conductive ion is lithium ion, and the conductive ion is inserted into the oxide-based ionic conductor at a potential equal to or less than 2.5 V (vs. Li⁺/Li).

### (Item 5)

In the secondary battery according any one of items 1 to 4, an amount of the conductive ion inserted into the oxide-based ionic conductor is 80% or less of an initial amount of the conductive ion initially contained in the oxide-based ionic conductor before the conductive ion is inserted into the oxide-based ionic conductor.

### (Item 6)

In the secondary battery according to any one of items 1 to 5, the oxide-based ionic conductor is a pyrochlore oxide which includes a defect structure and has a composition formula expressed by Aa_{2-α}Ab_{(1+α)/3}B₂O_{7-β}X_{γ}, where:
Aa is alkali metal,
Ab includes a lanthanoid
B is a cation different from Aa and Ab,
X is an anion replaceable by an O atom that forms the pyrochlore oxide,
0.6 < α < 2.0,
0 < β ≤ 1, and
0 < γ ≤ 1.

### (Item 7)

In the secondary battery according to item 6, wherein
the cation expressed as B in the composition formula of the pyrochlore oxide is Nb.

### (Item 8)

In the secondary battery according to any one of items 1 to 7, the positive electrode active material has a greater particle size than the oxide-based ionic conductor.

### (Item 9)

In the secondary battery according to any one of items 1 to 8, a weight ratio of the oxide-based ionic conductor to the positive electrode active material in the positive electrode is greater than 0 wt%, and equal to or less than 10 wt%.

### (Item 10)

In the secondary battery according to any one of items 1 to 9, wherein
the positive electrode active material, the oxide-based ionic conductor, and the electrolyte solution form a three-phase interface in a portion where the positive electrode active material and the oxide-based ionic conductor are in contact with each other.

## Claims

1. A secondary battery comprising:
a positive electrode (14);
a negative electrode (12); and
an electrolyte layer (15) including an electrolyte solution (15a) that conducts a conductive ion between the positive electrode and the negative electrode, wherein
the positive electrode includes a positive electrode active material (14a) and an oxide-based ionic conductor (14b),
the positive electrode active material is in contact with at least a part of the oxide-based ionic conductor, and
the electrolyte solution exists between the positive electrode active material and the oxide-based ionic conductor to allow the conductive ion to be electrochemically inserted into the oxide-based ionic conductor.

2. The secondary battery according to claim 1, wherein
the oxide-based ionic conductor contains a halogen element in a crystal structure of the oxide-based ionic conductor.

3. The secondary battery according to claim 1 or 2, wherein
the oxide-based ionic conductor is a mixed ionic-electronic conductor having both ionic conductivity and electronic conductivity with the conductive ion being inserted into the oxide-based ionic conductor.

4. The secondary battery according to any one of claims 1 to 3, wherein
the conductive ion is lithium ion, and
the conductive ion is inserted into the oxide-based ionic conductor at a potential equal to or less than 2.5 V (vs. Li⁺/Li).

5. The secondary battery according to any one of claims 1 to 4, wherein
an amount of the conductive ion inserted into the oxide-based ionic conductor is 80% or less of an initial amount of the conductive ion initially contained in the oxide-based ionic conductor before the conductive ion is inserted into the oxide-based ionic conductor.

6. The secondary battery according to any one of claims 1 to 5, wherein
the oxide-based ionic conductor is a pyrochlore oxide which includes a defect structure and has a composition formula expressed by Aa_{2-α}Ab_{(1+α)/3}B₂O_{7-β}X_{γ}, where:
Aa is alkali metal,
Ab includes a lanthanoid
B is a cation different from Aa and Ab,
X is an anion replaceable by an O atom that forms the pyrochlore oxide,
0.6 < α < 2.0,
0 < β ≤ 1, and
0 < γ ≤ 1.

7. The secondary battery according to claim 6, wherein
the cation expressed as B in the composition formula of the pyrochlore oxide is Nb.

8. The secondary battery according to any one of claims 1 to 7, wherein
the positive electrode active material is greater than the oxide-based ionic conductor in median particle size D50.

9. The secondary battery according to any one of claims 1 to 8, wherein
a weight ratio of the oxide-based ionic conductor to the positive electrode active material in the positive electrode is greater than 0 wt%, and equal to or less than 10 wt%.

10. The secondary battery according to any one of claims 1 to 9, wherein
the positive electrode active material, the oxide-based ionic conductor, and the electrolyte solution form a three-phase interface in a portion where the positive electrode active material and the oxide-based ionic conductor are in contact with each other.

11. The secondary battery according to claim 10, wherein
the three-phase is formed of the positive electrode active material which is at least one of LiNiₓCo_{y}Mn_{z}O₂ (NCM) and LiMn₁₋ₓFeₓPO₄ (LMFP), the oxide-based ionic conductor which is at least one of Li₂₋ₓLa_{(1+x)/3}Nb₂O₆F (LLNOF) and Li₃ₓLa_{2/3-x}TiO₃ (LLTO), and the electrolyte solution including a lithium salt and a solvent.

12. The secondary battery according to claim 11, wherein
the lithium salt of the electrolyte solution includes lithium hexafluorophosphate (LiPF₆).

13. The secondary battery according to any one of claims 1 to 12, wherein
the positive electrode active material has a particulate form,
the oxide-based ionic conductor has a particulate form, and
the particulate positive electrode and the particulate oxide-based ionic conductor are randomly mixed in the positive electrode.

14. The secondary battery according to any one of claims 1 to 12, wherein
the positive electrode active material has a particulate form, and
an outer surface of the particulate positive electrode active material is coated with the oxide-based ionic conductor in the positive electrode.
